## Europäisches Patentamt

## European Patent Office

## Office européen des brevets

(11) Veröffentlichungsnummer: **0 114 595**
**B1**

---

(12) **EUROPÄISCHE PATENTSCHRIFT**

(51) Int. Cl.⁴: **G 01 N 29/04,** G 10 K 11/34 //
A61B10/00

(45) Veröffentlichungstag der Patentschrift:
14.12.88

(21) Anmeldenummer: **84100015.1**

(22) Anmeldetag: **02.01.84**

---

(54) Ultraschallabbildungssystem.

---

(30) Priorität: **21.01.83 DE 3301981**

(43) Veröffentlichungstag der Anmeldung:
**01.08.84 Patentblatt 84/31**

(45) Bekanntmachung des Hinweises auf die Patenterteilung:
**14.12.88 Patentblatt 88/50**

(84) Benannte Vertragsstaaten:
**BE CH DE FR GB IT LI SE**

(56) Entgegenhaltungen:
**EP-A-0 006 197**
**DE-A-2 811 544**
**DE-A-2 912 410**
**FR-A-2 450 596**
**US-A-4 127 034**

(73) Patentinhaber: **Siemens Aktiengesellschaft Berlin und München, Wittelsbacherplatz 2, D-8000 München 2 (DE)**

(72) Erfinder: **Lerch, Reinhard, Dr., Lachnerstrasse 57, D-8520 Erlangen (DE)**

---

LIBER, STOCKHOLM 1988

## Beschreibung

Die Erfindung bezieht sich auf ein Ultraschallabbildungssystem mit einem linearen Array aus mehreren Wandlerelementen, von denen jeweils eine Gruppe gemeinsam gesteuerter Wandlerelemente eine Strahlapertur bilden und denen ein Sendesystem und ein Empfangssystem zugeordnet sind, die jeweils mit einer elektronischen Fokussierung des Schallfeldes durch Phasenverzögerung und mit Parallelscan des Schallfeldes durch elektronische Fortschaltung versehen sind.

In der zerstörungsfreien Werkstoffprüfung mit Ultraschall werden zur Fehlervermessung wegen des verbesserten Auflösungsvermögens im zunehmendem Maße fokussierende Schwinger eingesetzt, wobei für unterschiedliche Fehlertiefen verschiedene Prüfköpfe mit entsprechenden Brennweiten erforderlich sind. Hier bringt ein Array-Prüfkopf durch die Möglichkeit der elektronischen Fokussierung auf verschiedene Werkstofftiefenbereiche eine wesentliche Ersparnis an Prüfzeit und Kosten.

Die auf der Technik der Strahlergruppen basierenden Systeme lassen sich grob in drei Gruppen unterteilen, nämlich die Bildwandler, die Echtzeit- oder Realtime-Scanner und phasengesteuerte Gruppenstrahler oder Phased-Arrays.

Bildwandler sind Systeme, bei denen ein durchschalltes Objekt mittels einer akustischen Linse auf ein Linien- oder Flächenarray abgebildet wird. Die über der Array-Ebene herrschende stationäre Schalldruckverteilung wird abgefragt, indem ein Element nach dem anderen durchgetaktet wird. Da Auflösungsvermögen und Gesichtsfeld von Elementengröße und -anzahl abhängen, ist die Zahl der Einzelelemente bei Bildwandlern verhältnismäßig groß, beispielsweise mehrere 1000. Das System akustische Linse-Bildwandler registriert also die stationäre Schalldruckverteilung in einer zur Array-Fläche parallelen Objektebene.

Der Realtime-Scanner arbeitet hingegen im Puls-Echo-Betrieb. Der Prüfkopf ist ein lineares Array, dessen Elemente einzeln oder in Gruppen nacheinander durchgetaktet werden. Aus Echohöhe und Laufzeit wird auf einem helligkeitsgesteuerten Oszilloskop ein B-Bild aufgebaut, dessen Breite durch die Array-Länge gegeben ist.

Beim Phased-Array, dessen Prüfkopf gegenüber dem des Realtime-Scanner im allgemeinen eine geringere Elementenzahl hat, tragen alle Einzelschwinger zum Aufbau und zur Steuerung des Schallfeldes bei. Aufgrund der Möglichkeit der Strahlschwenkung erhält man mit der Phased-Array-Technik trotz geringer Prüfkopflänge ein verhältnismäßig großes sektorförmiges B-Bild.

Es ist ein Ultraschallabbildungssystem für Untersuchungen an Reaktordruckbehältern als phasengesteuertes Puls-Echo-System bekannt, das neben A-, B- und C-Scan die Möglichkeit von holographischen Untersuchungen bietet. Das gesamte System wird durch einen PDP 11/34 Computer gesteuert. Zur schnellen Fehlersuche und -lokalisation dient der Puls-Echo-Betrieb. Die akustische Holographie liefert dann genauere Information über fehlerverdächtige Gebiete. Der Prüfkopf enthält ein lineares Array aus 120 Sende- und 120 Empfangselementen, die in zwei Reihen nebeneinander angeordnet sind. Das System arbeitet bei einer Ultraschallfrequenz von 2,3 MHz und der Elementenabstand beträgt $\lambda/2$ für Dichtewellen und $\lambda$ für Schubwellen. Jedes Element hat einen eigenen Impulsgenerator. Diesen Sende- und Empfangselementen ist ein Sendesystem und ein Empfangssystem zugeordnet. Beim Puls-Echo-Betrieb werden im Sendefall von den 120 Elementen immer 16 Elemente zusammengeschaltet, im Empfangsfall arbeiten von dieser Gruppe nur 8 Elemente. Im Sendefall besteht die Strahlapertur aus 16 Elementen, die mittels eines Koppelfeldes auf die 120 Sendeelemente fortgeschaltet werden. Die Empfangssignale werden über ein Koppelfeld geleitet, vorverstärkt, analog-digital gewandelt, mittels eines Schieberegisters geeignet verzögert und wieder in analoge Signale zurückgewandelt. Die Prüfgeschwindigkeit von Schweißnähten beträgt bis zu 1/2 m²/min (W. Gebhard: "Grundlagen, Technik und Anwendung in der Werkstoffprüfung", IzfP-Bericht Nr. 770117-TW, Seiten 60 bis 65, Saarbrücken 1977).

Bei diesem bekannten Ultraschallabbildungssystem wird die Ansteuerung des Arrays mit Hilfe eines Koppelfeldes gelöst. Es erscheint jedoch nicht möglich, ein aus mehreren 1000 Koppelfeldpunkten bestehendes Koppelfeld aufzubauen, das bei hohen Ultraschallfrequenzen noch einwandfrei arbeitet.

Aus der US-Patentschrift 4 127 034 ist eine Ultraschallabbildungsvorrichtung mit einem linearen Array aus mehreren Wandlerelementen bekannt, bei der jedem Wandlerelement jeweils nur ein Schalter zugeordnet ist, der sowohl für den Sende- als auch für den Empfangsfall dient. Bei dieser Vorrichtung ist jedoch nur für den Empfangsfall eine dynamische Fokussierung mittels variabler Verzögerungseinrichtungen vorgesehen. Eine elektronische Fokussierung des gesendeten Schallfeldes kann mit dieser Vorrichtung nicht durchgeführt werden.

Aus der deutschen Offenlegungsschrift DE-OS-2 811 544 ist weiterhin eine Ultraschallabbildungsvorrichtung bekannt, bei der die Wandlerelemente eines linearen Arrays zum Schwenken des Schallstrahls mit unterschiedlichen Verzögerungszeiten angesteuert werden können. Dabei ist jedem Wandlerelement des Arrays eine variable Verzögerungsschaltung zugeordnet, die jeweils zwei mit Abgriffen versehene LC-Verzögerungsleitungen enthält. Eine derartige Vorrichtung ist jedoch für ein lineares Array, das aus 200 bis 300 Wandlerelementen aufgebaut ist, nur mit hohen Aufwand zu realisieren.

Der Erfindung liegt nun die Aufgabe zugrunde, ein Ultraschallabbildungssystem für hohe Ultraschallfrequenzen, insbesondere wenigstens etwa 30 MHz, anzugeben, bei dem die Anwendung eines Koppelfeldes im Sende- und Empfangssystem vermieden wird. Zugleich soll das Ultraschallabbildungssystem bei dieser Ultraschallfrequenz eine Ultraschall-C-Bild-Darstellung feinstrukturierter Objekte ermöglichen. Außerdem soll das Ultraschallabbildungssystem geeignet sein für die Anwendung in der Medizin, vorzugsweise der Diagnose von Hauterkrankungen, insbesondere der Diagnose am offenen Herzen. Es soll ferner geeignet sein zur Anwendung in der zerstörungsfreien Werkstoffprüfung, vorzugsweise in der Fehlerortung dünner gelöteter und geklebter Schichten, insbesondere zur Schichtdickenbestimmung in Mehrschichtsystemen.

Diese Aufgabe wird erfindungsgemäß gelöst mit den kennzeichnenden Merkmalen der Ansprüche 1 - 3. Dadurch, daß für jedes Wandlerelement der Strahlapertur jeweils eine Verzögerungszeit digital eingestellt und mit Hilfe eines Startimpulses getriggert wird und daß von den Wandlerelementen des linearen Arrays immer nur eine Gruppe aktiv ist, die jeweils über Senderschalter mit dem Sendesystem und jeweils über Empfängerschalter in Reihe mit einer Verdrahtungsanordnung mit dem Empfangssystem verbunden ist, wird erreicht, daß man ein Ultraschallabbildungssystem für hohe Ultraschallfrequenzen, insbesondere wenigstens etwa 30 MHz, aufbauen kann. Bei diesem in Puls-Echo-Betrieb arbeitenden Ultraschallabbildungssystem, das beispielsweise aus mehreren linear angeordneten Wandlerelementen, vorzugsweise mehreren 100 Wandlerelementen, besteht, erfolgt die Ansteuerung zwecks Fokussierung phasenverzögert. Es wird somit auf elektronischem Wege eine Ultraschallinse gebildet. Die Strahlapertur, die beispielsweise aus mehreren vorzugsweise aus etwa 15, insbesondere aus etwa 30, linear angeordneten Wandlerelementen besteht, wird elektronisch fortgeschaltet, beispielsweise gemäß einer Gruppenfortschaltung, vorzugsweise gemäß einem Halbschrittverfahren und insbesondere gemäß einem modifizierten Halbschrittverfahren.

Durch diese Maßnahmen können die Funktionen von mehreren technisch eingesetzten Einzelprüfköpfen in einem einzigen Prüfkopf verbunden werden. Mit diesem Ultraschallabbildungssystem können ferner Kontaktierungsprobleme bei Löt- und Klebeschichten zwischen Kühlkörpern und IC-Gehäusen gelöst werden. Es hat eine hohe Auflösung, beispielsweise eine laterale Auflösung von etwa 150 μm. Neben diesen Anwendungen in der Werkstoffprüftechnik eignet sich das Ultraschallabbildungssystem in der Medizin beispielsweise zur Diagnose der Sehnervdegeneration beim grünen Star, wobei eine Ultraschallfrequenz von etwa 15 MHz eingestellt wird. Weitere Anwendungen liegen in der Hautdiagnose und in der Herz- und Nierendiagnose am geöffneten Patienten zur Lokalisierung einer Stenose bzw. eines Nierensteins. Hierzu wird zweckmäßig eine höhere Ultraschallfrequenz, vorzugsweise wenigstens etwa 30 MHz angewandt. Außerdem liefert das Gerät neben der C-Bild-Darstellung das in der Medizin übliche Ultraschall-B-Bild.

Zur weiteren Erläuterung wird auf die Zeichnung Bezug genommen, in der ein Ausführungsbeispiel einer Vorrichtung nach der Erfindung schematisch veranschaulicht ist.

Figur 1 zeigt ein Blockschaltbild des Ultraschallabbildungssystems und in

Figur 2 ist eine vorteilhafte Sende- und Empfangsgabelschaltung veranschaulicht.

Figur 3 stellt ein Verfahren der elektronischen Fortschaltung des Schallfeldes dar.

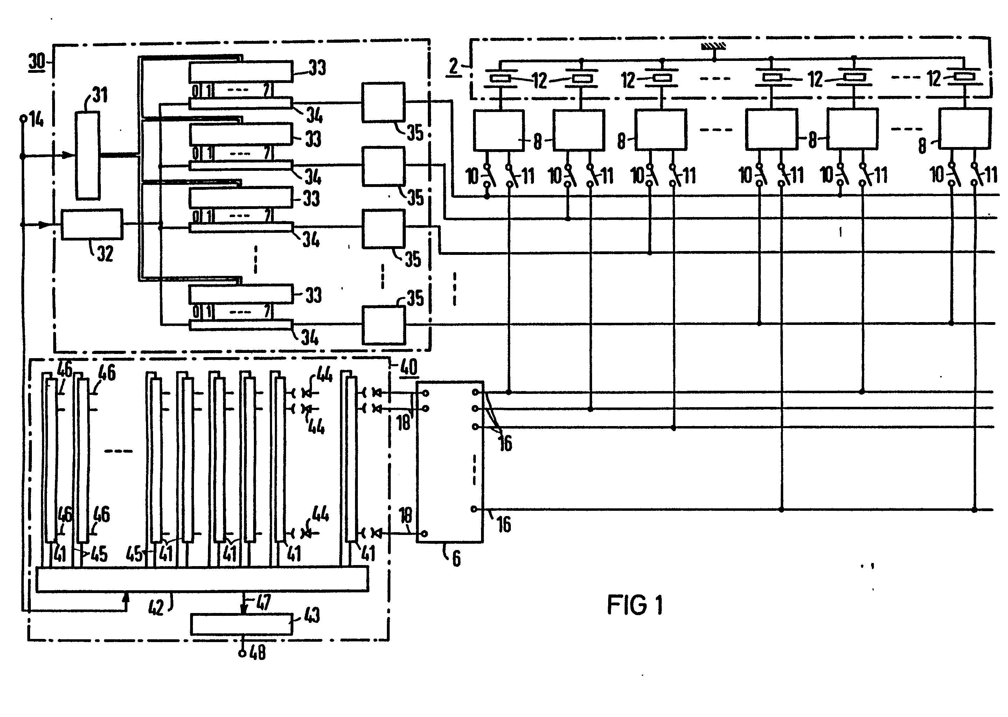

In Figur 1 ist ein Blockschaltbild eines Ultraschallabbildungssystems dargestellt, das aus einem linearen Array 2, einem Sendesystem 30, einem Empfangssystem 40, einer Verdrahtungsanordnung 6 und aus mehreren Sende- und Empfangsgabelschaltungen 8, beispielsweise 300, besteht. Außerdem ist den Sende- und Empfangsgabelschaltungen 8 jeweils ein Senderschalter 10 und ein Empfängerschalter 11 zugeordnet. Das lineare Array 2 enthält mehrere Wandlerelemente 12, vorzugsweise 300, die beispielsweise aus Bleimetaniobat $Pb(NO_3)$, vorzugsweise aus Blei-Zirkonat-Titanat PZT, bestehen können. Die Ultraschallfrequenz dieser Wandlerelemente 12 beträgt vorzugsweise wenigstens 30 MHz. Bei diesem im Impuls-Echo-Betrieb arbeitenden Ultraschallabbildungssystem ist von den Wandlerelementen 12 jeweils nur eine Gruppe von n Wandlerelementen, vorzugsweise 15, insbesondere 30 Wandlerelemente 12, gleichzeitig aktiv. Diese n aktiven Wandlerelemente 12 bilden jeweils die Strahlapertur, die beispielsweise gemäß der Gruppenfortschaltung, vorzugsweise gemäß dem Halbschrittverfahren und insbesondere gemäß einem modifizierten Halbschrittverfahren, elektronisch fortgeschaltet wird. Die Ansteuerung zwecks Fokussierung erfolgt phasenverzögert. Das Rastermaß des aus beispielsweise 300 Wandlerelementen 12 bestehenden linearen Arrays 2 ist beispielsweise 150 μm, wobei die eigentliche Schwingerbreite, die gleich ist dem Rastermaß minus der Schnittbreite, etwa 100 μm beträgt. Die Gesamtlänge des Arrays 2 beläuft sich somit auf 45 mm. Die Länge der Schwinger beträgt beispielsweise 5,5 mm, während sich ihre Dicke aus der Resonanzbedingung ergibt. Bei Bleimetaniobat $Pb(NO_3)$ beträgt die Dicke der Wandlerelemente beispielsweise etwa 55 μm und bei Blei-Zirkonat-Titanat PZT beträgt die Dicke beispielsweise etwa 67 μm.

Das Sendesystem 30 besteht aus einem 5-bit-Zähler 31, einer Konstantverzögerung 32, mehreren programmierbaren Festwertspeichern 33, mehreren digital programmierbaren Verzögerungsleitungen 34 und mehreren Sendeverstärkern 35. Ein programmierbarer Festwertspeicher 33, eine digital programmierbare Verzögerung 34 und ein Sendeverstärker 35 ist jeweils einem der n aktiven Wandlerelemente 12 der Strahlapertur zugeordnet, wenn die elektronische Fortschaltung des Schallfeldes gemäß der Gruppenfortschaltung erfolgt. Die Strahlapertur wird beispielsweise aus 30 Wandlerelementen 12 gebildet.

Aber wenn die elektronische Fortschaltung des Schallfeldes gemäß dem Halbschrittverfahren oder gemäß dem modifizierten Halbschrittverfahren erfolgt, so wird das Sendesystem 30 um einen Kanal, d. h. um einen programmierbaren Festwertspeicher 33, eine digital programmierbare Verzögerungsleitung 34 und um einen Sendeverstärker 35 erweitert. Damit besteht die Strahlapertur abwechselnd aus n oder n + 1 aktiven Wandlerelementen 12. Die Ansteuerung der Sendeverstärker 35 erfolgt über Rechteckimpulse, die von einem in der Figur nicht dargestellten Taktgenerator am Eingang 14 geliefert werden. Diese Rechteckimpulse werden mit Hilfe der programmierbaren Verzögerungsleitung 34 verzögert. Die Verzögerungszeiten sind jeweils in digitaler Form in dem programmierbaren Festwertspeichern 33 abgespeichert. Als programmierbare Festwertspeicher 33 sind vorzugsweise PROMS der Speicherorganisation 32 x 8 vorgesehen. Diese PROMS werden über 5-bit-Adressen angesprochen, die mittels des 5-bit-Zählers 31 erzeugt werden.

Das Empfangssystem 40 besteht aus mehreren analogen Verzögerungsleitungen 41, einem Analog-Multiplexer 42, einem Demodulator 43 und aus mehreren Verstärkern 44 mit Stromausgang. Als analoge Verzögerungsleitungen 41 sind Tapped Delay Lines TDLs vorgesehen. Diese Tapped Delay Lines sind mit einer beidseitigen Anzapfung 45 versehen, d. h., daß die beiden Enden der Tapped Delay Lines jeweils als Signalausgang benutzt werden.

Erfolgt die elektronische Fortschaltung des Schallfeldes gemäß der Gruppenfortschaltung oder gemäß dem modifizierten Halbschrittverfahren, so enthält das Empfangssystem 40 n/2 Tapped Delay Lines TDLs. Erfolgt jedoch die elektronische Fortschaltung des Schallfeldes gemäß dem Halbschrittverfahren, so enthält dieses Empfangssystem 40 n Tapped Delay Lines TDLs. Bei der Verwendung der Gruppenfortschaltung und des Halbschrittverfahrens ist jeweils einem Tapped Delay Line TDL n/2 Abgriffe 46 vorgesehen und bei der Verwendung des modifizierten Halbschrittverfahrens ist jeweils einem Tapped Delay Line TDL n/2 + 1 Abgriffe 46 vorgesehen. Diese Abgriffe 46 sind jeweils mit zwei Verstärkern 44 mit Stromausgang versehen. Die maximale Verzögerungszeit eines Tapped Delay Line TDL beträgt beispielsweise etwa 100 nsec. Jede Anzapfung 45 der Tapped Delay Lines TDLs ist mit dem Analog-Multiplexer 42 verbunden, dessen Ausgang 47 mit dem Demodulator 43 verbunden ist. Die Ansteuerung des Analog-Multiplexers 42 erfolgt über Rechteckimpulse, die von einem in der Figur nicht dargestellten Taktgenerator am Eingang 14 geliefert werden. Das Empfangssystem 40 und das Sendesystem 30 werden synchron von einem Taktgenerator gesteuert. Am Ausgang 48 des Demodulators 43 erhält man ein Videosignal, das auf einem in der Figur nicht dargestellten Sichtschirm dargestellt wird.

In der Verdrahtungsanordnung 6 werden die Signalleitungen 16, die mittels der Empfängerschalter 11 jeweils mit einem Wandlerelement 12 verbunden Sind, mit den Eingängen 18 des Empfangssystems 40 verdrahtet.

Bei der Verwendung der Gruppenfortschaltung werden n Signalleitungen 16 mit n/2 x n/2 Eingängen 18 des Empfangssystems 40 verdrahtet. Die Anzahl n/2 x n/2 Eingänge 18 ergibt sich, weil bei der Verwendung der Gruppenfortschaltung n/2 Tapped Delay Lines TDLs mit jeweils n/2 Abgriffe 46 vorhanden sind. Erfolgt die elektronische Fortschaltung des Schaltfeldes gemäß dem Halbschrittverfahren, so werden n + 1 Signalleitungen 16 mit n x n/2 Eingängen 18 und bei der elektronischen Fortschaltung des Schallfeldes gemäß dem modifizierten Halbschrittverfahren werden n + 1 Signalleitungen 16 mit n/2 x (n/2 + 1) Eingängen 18 fest verdrahtet.

Bei dieser Lösung der festen Verdrahtung von Signalleitungen 16 und Eingängen 18 des Empfangssystems 40 benötigt man allerdings mehr Verzögerungsleitungen 41 als bei der Verwendung eines Koppelfeldes wie im Stand der Technik. Die Verwendung eines Koppelfeldes läßt sich für Ultraschallfrequenzen unterhalb von 10 MHz vielleicht noch realisieren, aber bei Ultraschallfrequenzen von beispielsweise etwa 30 MHz erscheint es, insbesondere wegen zu erwartender negativen Effekte durch elektrische Kopplung sowie infolge der bei den hohen Frequenzen nur schwer zu realisierenden Koppelfeldschalter, als nicht möglich, ein Koppelfeld aufzubauen, das noch einwand frei arbeitet.

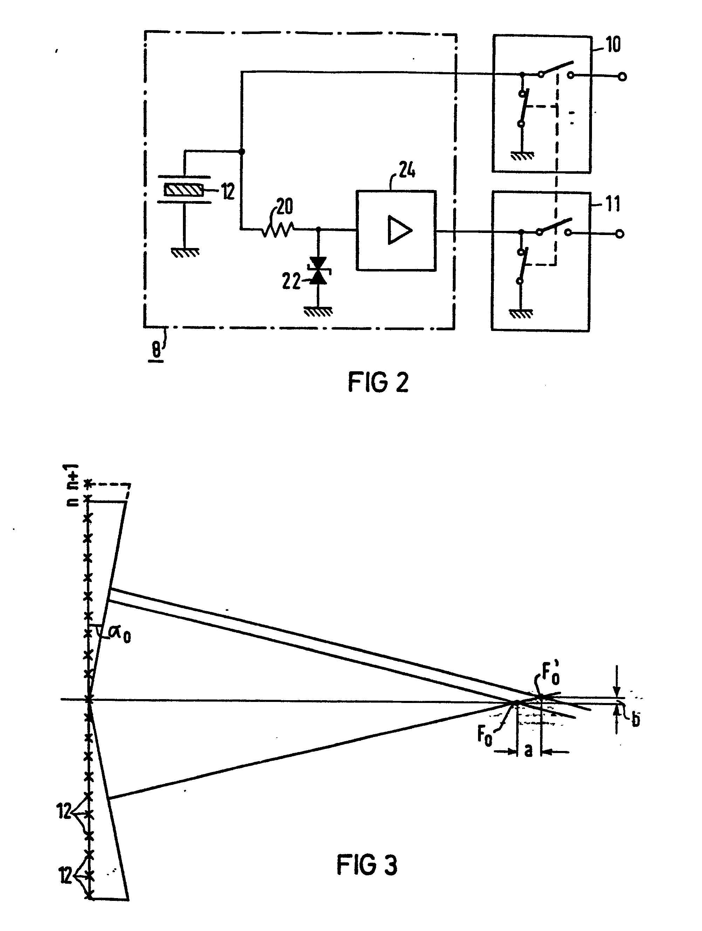

Die Figur 2 zeigt eine vorteilhafte Sende- und Empfangsgabelschaltung 8 mit einem Senderschalter 10 und einem Empfängerschalter 11. Diese Sende- und Empfangsgabelschaltung 8 soll jeweils Sende- und Empfangssignale der Wandlerelemente 12 trennen. Im Sendefall ist der Senderschalter 10 direkt am Wandlerelement 12 angeordnet und im Empfangsfall sind zwischen dem Empfängerschalter 11 und dem Wandlerelement 12, ein Widerstand 20, eine sogenannte bidirektionale Transienten-Absorptions-Zenerdiode 22 und ein Empfangsverstärker 24. Die bidirektionale Transienten-Absorptions-Zenerdiode 22 mit niedriger Schwellspannung dient als Schutz des Empfängereingangs. Der Widerstand 20 bestimmt den-Strom durch die bidirektionale Transienten-Absorptions Zenerdiode 22. Da diese Sende und Empfangsgabelschaltung 8 keinen geschlossenen Kreis bildet, ist somit die Schwingneigung vermieden. Diese Schalter 10 und 11 sind jeweils als Doppelschalter ausgeführt wegen der damit erzielbaren Sperrdämpfung. Die Schaltknacke des Senderschalters 10 werden annähernd vermieden, wenn man als Schalter 10 PIN-Dioden verwendet. Im Empfangsfall wird als Empfängerschalter 11 ein CMOS-Schalter verwendet wegen seiner leichten Ansteuerbarkeit mit TTL-Pegel und der hohen Sperrdämpfung.

Um bei geringer Fokusbreite einen relativ langen Fokus zu erzielen, wird das sogenannte Axicon-Prinzip angewendet. Bei Ultraschall-Arrays, die nach dem Axicon-Prinzip arbeiten, steigt die Verzögerungszeit vom Wert Null im Zentrum der Linse linear bis zu einem Maximalwert an den Grenzen des aktiven Arrays. Bei der Anwendung der Gruppenfortschaltung werden n Wandlerelemente zum gemeinsamen Senden und Empfangen zu einer Gruppe zusammengeschaltet und bilden somit die Strahlapertur. Sie erzeugt eine Zeile des Ultraschallbildes. Durch periodische Zuschaltung eines Wandlerelementes auf der einen Seite der Gruppe und gleichzeitiges Abschalten eines Wandlerelementes auf der Gegenseite wird die Bildzeile um eine Wandlerelementenbreite verschoben. Bei der Verwendung des Halbschrittverfahrens läßt sich die Geschlossenheit des Bildeindruckes erhöhen, indem man nun ein Wandlerelement alternierend zu- bzw. abschaltet. Durch dieses alternierendes Zu- bzw. Abschalten eines Wandlerelementes wird bei gleicher Wandlerelementenzahl die Zeilendichte verdoppelt.

In Figur 3 ist ein Verfahren der elektronischen Fortschaltung des Schallfeldes dargestellt. Diese elektronische Fortschaltung des Schallfeldes erfolgt nach dem modifizierten Halbschrittverfahren. Die Strahlapertur besteht mit dem Fortschaltungstakt abwechselnd aus n oder n+1 Wandlerelementen 12. Dieses weitere n+1. Wandlerelement 12 wird unsymmetrisch an die mit n Wandlerelementen 12 aktive Linse angehängt. Die Verzögerungszeit des n+1. Wandlerelementes 12 ist größer als die Verzögerungszeit des n. Wandlerelementes 12. Die Verzögerungszeiten sind nach dem Axicon-Prinzip vorbestimmt, bei dem die Verzögerungszeit von Null im Zentrum der Linse bis zu einem Maximalwert an den Grenzen des aktiven Arrays steigt. Durch dieses unsymmetrische Anhängen des n+1. Wandlerelementes 12 erhält man die gewünschte laterale Verschiebung des Schallfeldes um das halbe Rastermaß b, wie beim Halbschrittverfahren. Außerdem ist damit eine Vergrößerung a der Fokustiefe um beispielsweise etwa 10 % verbunden genauso wie beim Halbschrittverfahren. Allerdings ist diese Vergrößerung im Rahmen der realisierbaren Fokuslänge tragbar, wenn man die Ausnutzung der Gesamtfokuslänge auf einen beispielsweise 1 bis 1,5 mm langen Mittelbereich beschränkt.

Der Unterschied zwischen dem Halbschrittverfahren und dem modifizierten Halbschrittverfahren liegt in der Gestaltung des Empfangssystems 40. Durch das modifizierte Halbschrittverfahren werden die n Tapped Delay Lines TDLs beim Halbschrittverfahren auf n/2 Tapped Delay Lines TDLs vermindert, wobei allerdings an den Tapped Delay Lines TDLs statt n/2 Abgriffe 46 nun n/2 + 1 Abgriffe 46 für die hinzukommende Zeitstufe vorgesehen sind.

**Patentansprüche**

1. Ultraschallabbildungssystem mit einem linearen Array (2) aus mehreren Wandlerelementen (12), von denen jeweils eine Gruppe gemeinsam gesteuerter Wandlerelemente (12) eine Strahlapertur bilden und denen ein Sendesystem (30) und ein Empfangssystem (40) zugeordnet sind, die jeweils mit einer elektronischen Fokussierung des Schallfeldes durch Phasenverzögerung und mit Parallelscan des Schallfeldes durch elektronische Fortschaltung versehen sind, <u>gekennzeichnet</u> durch folgende Merkmale

a) im Sendesystem (30) ist für die Wandlerelemente (12) der Strahlapertur jeweils eine digital programmierbare Verzögerungsleitung (34), ein programmierbarer Festwertspeicher (33) und ein Sendeverstärker (35) vorgesehen,

b) das Empfangssystem (40) enthält für n Wandlerelemente (12) der Strahlapertur jeweils eine analoge Verzögerungsleitung (41), die jeweils mit n/2 Abgriffen (46) versehen sind,

c) für alle analogen Verzögerungsleitungen (41) ist ein gemeinsamer Analog-Multiplexer (42) vorgesehen,

d) die Wandlerelemente (12) des linearen Arrays (2) sind jeweils über einen Senderschalter (10) mit dem Sendesystem (30) und jeweils über einen Empfängerschalter 11 in Reihe mit einer festen Verdrahtungsanordnung (6) mit dem Empfangssystem (40) verbunden.

2. Ultraschallabbildungssystem mit einem linearen Array (2) aus mehreren Wandlerelementen (12), von denen jeweils eine Gruppe gemeinsam gesteuerter Wandlerelemente (12) eine Strahlapertur bilden und denen ein Sendesystem (30) und ein Empfangssystem (40) zugeordnet sind, die jeweils mit einer elektronischen Fokussierung des Schallfeldes durch Phasenverzögerung und mit Parallelscan des Schallfeldes durch elektronische Fortschaltung versehen sind, gekennzeichnet durch folgende Merkmale

a)   im Sendesystem (30) ist für die n oder n + 1 Wandlerelemente (12) der Strahlapertur jeweils eine digital programmierbare Verzögerungsleitung (34), ein programmierbarer Festwertspeicher (33) und ein Sendeverstärker (35) vorgesehen,

b)   das Empfangssystem (40) enthält n/2 Verzögerungsleitungen (41) mit jeweils n/2 Abgriffen (46),

c)   für alle analogen Verzögerungsleitungen (41) ist ein gemeinsamer Analog-Multiplexer (42) vorgesehen,

d)   die Wandlerelemente (12) des linearen Arrays (2) sind jeweils über einen Senderschalter (10) mit dem Sendesystem (30) und jeweils über einen Empfängerschalter 11 in Reihe mit einer festen Verdrahtungsanordnung (6) mit dem Empfangssystem (40) verbunden.

3. Ultraschallabbildungssystem mit einem linearen Array (2) aus mehreren Wandlerelementen (12), von denen jeweils eine Gruppe gemeinsam gesteuerter Wandlerelemente (12) eine Strahlapertur bilden und denen ein Sendesystem (30) und ein Empfangssystem (40) zugeordnet sind, die jeweils mit einer elektronischen Fokussierung des Schallfeldes durch Phasenverzögerung und mit Parallelscan des Schallfeldes durch elektronische Fortschaltung versehen sind, gekennzeichnet durch folgende Merkmale

a)   im Sendesystem (30) ist für die n oder n + 1 Wandlerelemente (12) der Strahlapertur jeweils eine digital programmierbare Verzögerungsleitung (34), ein programmierbarer Festwertspeicher (33) und ein Sendeverstärker (35) vorgesehen

b)   das Empfangssystem (40) enthält n/2 Verzögerungsleitungen mit jeweils n/2 + 1 Abgriffen (46),

c)   für alle analogen Verzögerungsleitungen (41) ist ein gemeinsamer Analog-Multiplexer (42) vorgesehen,

d)   die Wandlerelemente (l2) des linearen Arrays (2) sind jeweils über einen Senderschalter (10) mit dem Sendesystem (30) und jeweils über einen Empfängerschalter 11 in Reihe mit einer festen Verdrahtungsanordnung (6) mit dem Empfangssystem (40) verbunden.

4. Ultraschallabbildungssystem nach einem der Ansprüche 1 bis 3, dadurch gekennzeichnet, daß als programmierbarer Festwertspeicher (33) programmierbare Festwertspeicher der Speicherorganisation 32 x 8 vorgesehen sind.

5. Ultraschallabbildungssystem nach einem der Ansprüche 1 bis 3, dadurch gekennzeichnet, daß das Sendesystem (30) mit einem 5-bit-Zähler (31) versehen ist.

6. Ultraschallabbildungssystem nach einem der Ansprüche 1 bis 3, dadurch gekennzeichnet, daß als analoge Verzögerungsleitungen (41) Tapped Delay Lines (TDL) für eine beidseitige Anzapfung (45 ) vorgesehen sind.

7. Ultraschallabbildungssystem nach einem der Ansprüche 1 bis 3, dadurch gekennzeichnet, daß die Abgriffe (46) der analogen Verzögerungsleitungen (41) jeweils mit zwei Verstärkern (44) mit Stromausgang versehen sind.

8. Ultraschallabbildungssystem nach Anspruch 5, dadurch gekennzeichnet, daß der Analog-Multiplexer (42) des Empfangssystems (40) und der 5-bit-Zähler (31) des Sendesystems (30) mit einem Taktgenerator verbunden sind.

9. Ultraschallabbildungssystem nach einem der Ansprüche 1 bis 3, dadurch gekennzeichnet, daß als Senderschalter (10) PIN-Dioden vorgesehen sind.

10. Ultraschallabbildungssystem nach einem der Ansprüche 1 bis 3, dadurch gekennzeichnet, daß als Empfängerschalter (11) CMOS-Analog-Schalter vorgesehen sind.

11. Ultraschallabbildungsstem nach einem der Ansprüche 1 bis 3, dadurch gekennzeichnet, daß zur mechanischen Fortbewegung des Arrays (2) senkrecht zur elektronischen Scanrichtung und senkrecht zum Schallfeld ein Schrittmotor vorgesehen ist.

12. Ultraschallabbildungssystem nach einem der Anprüche 1 bis 3, dadurch gekennzeichnet, daß es nach folgendem Betriebsverfahren arbeitet:

Im Sendesystem (30) werden mit Hilfe der programmierbaren Verzögerungsleitungen (34) Rechteckimpulse verzögert, deren Verzögerungszeiten in digitaler Form in programmierbaren Speichern (33) gespeichert sind.

**Claims**

1. Ultrasonic imaging system with a linear array (2) of several transducer elements (12), of which one group respectively of jointly controlled transducer elements (12) form a beam aperture and to which is assigned a transmitting system (30) and a receiving system (40) which are each provided with electronic focusing of the sonic field by phase delay and with parallel scanning of the sonic field by electronic stepping, characterised by the following features

a)   in the transmitting system (30) a digitally programmable delay line (34), a rammable constant value store (33) am and a transmission amplifier (35) are provided for each of the transducer elements (12) of the beam aperture,

b)   the receiving system (40) comprises for each of the n transducer elements (12) of the beam aperture an analogue delay line (41), each of which is provided with n/2, taps (46),

c)   a common analogue multiplexer (4,) is provided for all the analogue delay lines (41),

d) the transducer elements (12) of the linear array (2) are each connected via a transmitter switch (10) to the transmitting system (30) and via a receiver switch 11 in series with a fixed wiring arrangement (6) to the receiving system (40).

2. Ultrasonic imaging system with a linear array (2) of several transducer elements (12), of which one group respectively of jointly controlled transducer elements (12) form a beam aperture and to which are assigned a transmitting system (30) and a receiving system (40) which are each provided with electronic focusing of the sonic field by phase delay and with parallel scanning of the sonic field by electronic stepping, characterised by the following features

a) in the transmitting system (30) a digitally programmable delay line (34), a programmable constant value store (33) and a transmission amplifier (35) are provided for each of the n or n + 1 transducer elements (12) of the beam aperture,

b) the receiving system (40) comprises n/2 delay lines (41), each having n/2 taps (46),

c) a common analogue multiplexer (42) is provided for all the analogue delay lines (41),

d) the transducer elements (12) of the linear array (2) are each connected via a transmitter switch (10) to the transmitting system (30) and via a receiver switch 11 in series with a fixed wiring arrangement (6) to the receiving system (40).

3. Ultrasonic imaging system with a linear array (2) of several transducer elements (12), of which one group respectively of jointly controlled transducer elements (12) form a beam aperture and to which are assigned a transmitting system (30) and a receiving system (40) which are each provided with electronic focusing of the sonic field by phase delay and with parallel scanning of the sonic field by electronic stepping, characterised by the following features

a) in the transmitting system (30) a digitally programmable delay line (34), a programmable constant value store (33) and a transmission amplifier (35) are provided for each of the n or n + 1 transducer elements (12) of the beam aperture,

b) the receiving system (40) comprises n/2 delay lines, each having n/2 + 1 taps (46),

c) a common analogue multiplexer (42) is provided for all the analogue delay lines (41),

d) the transducer elements (12) of the linear array (2) are each connected via a transmitter switch (10) to the transmitting system (30) and via a receiver switch 11 in series with a fixed wiring arrangement (6) to the receiving system (40).

4. Ultrasonic imaging system according to one of claims 1 to 3, characterised in that programmable constant value stores cf storage organisation 32 x 8 are provided as the programmable constant value store (33).

5. Ultrasonic imaging system according to one of claims 1 to 3, characterised in that the transmitting system (30) is provided with a 5-bit ҫounter (31).

6. Ultrasonic imaging system according to one of claims 1 to 3, characterised in that tapped delay lines (TDL) for a two- sided tap (45) are provided as the analogue delay lines (41).

7. Ultrasonic imaging system according to one of claims 1 to 3, characterised in that the taps (46) of the analogue delay lines (41) are each provided with two intensifiers (44) with a current output.

8. Ultrasonic imaging system according to claim 5, characterised in that the analogue multiplexer (42) of the receiving system (40) and the 5-bit counter (31) of the transmitting system (30) are connected to a clock pulse generator.

9. Ultrasonic imaging system according to one of claims 1 to 3, characterised in that PIN diodes are provided as the transmitter switches (10).

10. Ultrasonic imaging system according to one of claims 1 to 3, characterised in that CMOS analogue switches are provided as the receiver switches (11).

11. Ultrasonic imaging system according to one of claims 1 to 3, characterised in that a stepping motor is provided for the mechanical progression of the array (2) perpendicular to the electronic scan direction and perpendicular to the sonic field.

12. Ultrasonic imaging system according to one of claims 1 to 3, characterised in that it operates according to the following operating method: in the transmitting system (30) rectangular pulses, the delay times of which are stored in digital form in programmable stores (33), are delayed by means of the programmable delay lines (34).

**Revendications**

1. Système de formation d'images ultrasonores au moyen d'ultrasons, comportant un réseau linéaire (2) formé de plusieurs éléments transducteurs (12), parmi lesquels un groupe d'éléments transducteurs (12) commandés en commun forme une ouverture de rayonnement et auxquels sont associés un système d'émission (30) et un système de réception (40), qui sont équipés chacun d'un système de focalisation électronique du champ ultrasonore au moyen d'un retard de phase et un dispositif réalisant un déplacement de balayage du champ ultrasonore au moyen d'une avance électronique,

remarquable par les caractéristiques suivantes:

a) dans le système d'émission (30) il est prévu, pour chacun des éléments transducteurs (12) de l'ouverture de rayonnement, une ligne à retard programmable numériquement (34), une mémoire morte programmable (33) et un amplificateur d'émission (35),

b) le système de réception (40) contient pour les n éléments transducteurs (12) de l'ouverture de rayonnement, des lignes à retard analogiques respectives (41) qui comportent chacune n/2 prises (46),

c) pour toutes les lignes à retard analogiques (41) il est prévu un multiplexeur analogique commun (42),

d) les éléments transducteurs (12) du réseau linéaire (2) sont reliés chacun par un interrupteur d'émission (10) au système d'émission (30) et par un interrupteur de réception (11) branché en série avec un dispositif de câblage fixe (6), au système de réception (40).

2. Système de formation d'images par ultrasons comportant un réseau linéaire formé de plusieurs éléments transducteurs (12), parmi lesquels un groupe d'éléments transducteurs (12) commandés en commun forme une ouverture de rayonnement et auxquels sont associés un système d'émission (30) et un système de réception (40), qui sont équipés chacun d'un système de focalisation électronique du champ ultrasonore au moyen d'un retard de phase et un dispositif réalisant un déplacement de balayage du champ ultrasonore au moyen d'une avance électronique, remarquable par les caractéristiques suivantes:

a) dans le système d'émission (30) il est prévu pour chacun des n ou n+1 éléments transducteurs (12) de l'ouverture numérique, une ligne à retard programmable numériquement (34), une mémoire morte programmable (33) et un amplificateur d'émission (35),

b) le système de réception (40) contient n/2 lignes à retard (41) comportant chacune n/2 prises (46),

c) pour toutes les lignes à retard analogiques (41) il est prévu un multiplexeur analogique commun (42),

d) les éléments transducteurs (12) du réseau linéaire (2) sont reliés chacun par un interrupteur d'émission (10) au système d'émission (30) et par un interrupteur de réception (11) branché en série avec un dispositif de câblage fixe (6), au système de réception (40).

3. Système de formation d'images par ultrasons comportant un réseau linéaire formé de plusieurs éléments transducteurs (12), parmi lesquels un groupe d'éléments transducteurs (12) commandés en commun forme une ouverture de rayonnement et auxquels sont associés un système d'émission (30), et un système de réception (40), qui sont équipés chacun d'un système de focalisation électronique du champ ultrasonore au moyen d'un retard de phase et un dispositif réalisant un déplacement de balayage du champ ultrasonore au moyen d'une avance électronique, remarquable par les caractéristiques suivantes:

a) dans le système d'émission (30) il est prévu pour chacun des n ou n+1 éléments transducteurs (12) de l'ouverture numérique, une ligne à retard programmable numériquement (34), une mémoire morte programmable (33) et un amplificateur d'émission (35),

b) le système de réception (40) contient n/2 lignes à retard (41) comportant chacune n/2+1 prises (46),

c) pour toutes les lignes à retard analogiques (41) il est prévu un multiplexeur analogique commun (42),

d) les éléments transducteurs (12) du réseau linéaire (2) sont reliés chacun par un interrupteur d'émission (10) au système d'émission (30) et par un interrupteur de réception (11) branché en série avec un dispositif de câblage fixe (6), au système de réception (40).

4. Système de formation d'images par ultrasons suivant l'une des revendications 1 à 3, caractérisé par le fait que l'on prévoit, comme mémoires mortes programmables (33), des mémoires mortes programmables possédant l'organisation de mémoire 32 x 8.

5. Système de formation d'images par ultrasons suivant l'une des revendications 1 à 3, caractérisé par le fait que le système d'émission (30) comporte un compteur (31) à 5 bits.

6. Système de formation d'images par ultrasons suivant l'une des revendications 1 à 3, caractérisé par le fait qu'on utilise, comme lignes à retard analogiques (41), des Tapped Delay Lines (TOL) pour un prélèvement bilatéral (45).

7. Système de formation d'images par ultrasons suivant l'une des revendicaions 1 à 3, caractérisé par le fait que les prises (46) des lignes à retard analogiques (41) comportent chacune deux amplificateurs (44) avec une sortie de courant.

8. Système de formation d'images par ultrasons suivant la revendication 5, caractérisé par le fait que le multiplexeur analogique (42) du système de réception (40)) et le compteur (31) à 5 bits du système d'émission (30) sont reliés à un générateur de cadence.

9. Système de formation d'images par ultrasons suivant l'une des revendications 1 à 3, caractérisé par le fait qu'il est prévu, comme interrupteurs d'émission (10), des diodes PIN.

10. Système de formation d'images par ultrasons suis vant l'une des revendications 1 à 3, caractérisé par le fait qu'il est prévu, comme interrupteur de réception (11), des commutateurs analogiques CMOS.

11. Système de formation d'images par ultrasons suivant l'une des revendications 1 à 3, caractérisé par le fait qu'il est prévu un moteur pas-à-pas pour réaliser l'avance mécanique du réseau (2) perpendiculairement par rapport à la direction de balayage électronique et perpendiculairement au champ ultrasonore.

12. Système de formation d'images par ultrasons suivant l'une des revendications 1 à 3, caractérisé par le fait qu'il fonctionne selon le procédé d'exploitation suivant dans le système d'émission (30) se trouve réalisé, à l'aide des lignes à retard programmables (35), un retardement d'impulsions rectangulaires, dont les temps de retard sont mémorisés sous forme numérique dans des mémoires programmables (33).

FIG 1

FIG 2

FIG 3